# EUROPEAN PATENT APPLICATION

(11) **EP 3 115 341 A1**
(43) Date of publication of application: **11.01.2017**
(21) Application number: 14884412.9
(22) Date of filing: 03.03.2014
(51) Int. Cl.: C02F 1/46, F01K 9/00, G21D 1/00

(54) **APPARATUS FOR SUPPLYING ELECTROLYTICALLY TREATED LIQUID AND METHOD FOR SUPPLYING ELECTROLYTICALLY TREATED LIQUID**

(71) Applicant: The Chugoku Electric Power Co., Inc., Hiroshima-shi, Hiroshima 730-8701 (JP)
(72) Inventor: YOSHIZAKI, Tsukasa, Hiroshima-shi Hiroshima 730-8701 (JP)
(74) Representative: Gill Jennings & Every LLP
(86) International application number: PCT/JP2014/055284
(87) International publication number: WO 2015/132859

(57) **Abstract**

The present invention is directed to provide devices for supplying electrolytically treated liquid and methods of supplying electrolytically treated liquid. A device for supplying electrolytically treated liquid according to the present invention includes a seawater electrolyzer unit that electrolyzes seawater; a seawater supply passage for supplying the seawater to the seawater electrolyzer unit; an electrolytically treated liquid supply passage for supplying the electrolytically treated seawater obtained by electrolysis in the seawater electrolyzer unit to the condenser tube; and a phytoplankton-removal unit provided in the seawater supply passage to remove a phytoplankton. Furthermore, a method of supplying electrolytically treated liquid according to the present invention is a method of supplying electrolytically treated liquid used to supply electrolytically treated seawater to a condenser tube of a water-cooled heat exchanger of a power plant, wherein the seawater containing divalent iron ions is flowing through the condenser tube, including the steps of: removing a phytoplankton in the seawater; electrolyzing the seawater from which the phytoplankton has been removed to obtain electrolytically treated seawater; and supplying the electrolytically treated seawater to the condenser tube.

## Description

### Technical Field

The present invention relates to devices for supplying electrolytically treated liquid and methods of supplying electrolytically treated liquid.

Seawater is used as a coolant for condensers in power plants. There was a problem that sessile invertebrates such as barnacles and mussels settle inside of heat exchange tubes made of aluminum brass where the coolant flows in the condenser. Settlement of sessile invertebrates on the heat exchange tubes in the condenser reduces thermal conductivity of the heat exchange tubes in the condenser or level of vacuum pressure in the condenser, resulting in reduction of the power output of a generator. To prevent sessile invertebrates from settling, chlorine is poured into seawater as a solution of this problem (JP-A-2011-92821).

In recent years, in power plants in Japan which is a country with four distinct seasons, such a phenomenon that the level of vacuum pressure in the condenser is decreased to affect the power output of a generator is observed during a certain period of winter season regardless of low temperature of circulating seawater with no significant change in temperature. Its cause, however, was unclear.

### Summary of the invention

### Means to solve the problems

The present inventors investigated cause of the decrease in level of vacuum pressure in a condenser during a certain winter time and found that phytoplankton proliferates drastically in this season. It was concluded that the following factors were responsible for the decrease in level of vacuum pressure in a condenser: the phytoplankton is broken during electrolysis and a huge amount of organic substances, which are the constituting elements of the phytoplankton, is released into the seawater, and these substances contribute to forming a film on the condenser tubes. The present invention was thus completed.

An aspect of the present invention is a device for supplying electrolytically treated seawater to a condenser tube of a water-cooled heat exchanger of a power plant, in which the seawater containing divalent iron ions is flowing through the condenser tube, including: a seawater electrolyzer unit for electrolyzing seawater; a seawater supply passage for supplying the seawater to the seawater electrolyzer unit; an electrolytically treated liquid supply passage for supplying the electrolytically treated seawater obtained by electrolysis in the seawater electrolyzer unit to the condenser tube; and a phytoplankton-removal unit provided in the seawater supply passage, by which a phytoplankton is removed. It can include a measuring unit provided in the seawater supply passage, by which a level of chlorophyll in the seawater is measured at a position upstream of the phytoplankton-removal unit. It can include a communication passage provided in the seawater supply passage, the communication passage being divided at a junction located downstream of the measuring unit of the seawater supply passage and upstream of the phytoplankton-removal unit, the communication passage being communicated with the seawater electrolyzer unit without passing through the phytoplankton-removal unit; a flow switch valve disposed at the junction; and a control unit for controlling the flow switch valve in such a manner that, when the level of the chlorophyll measured by the measuring unit is equal to or higher than a threshold, the seawater is supplied from the seawater supply passage to the seawater electrolyzer unit through the phytoplankton-removal unit, and when the level of the chlorophyll measured by the measuring unit is lower than the threshold, the seawater is supplied from the seawater supply passage to the seawater electrolyzer unit through the communication passage. It is preferable that the threshold is 0.05 µg/L or greater.

It is preferable that the tube is made of aluminum brass. It is preferable that the phytoplankton-removal unit is a filter device capable of removing the phytoplankton via filtration.

Another aspect of the present invention is a method of supplying electrolytically treated seawater to a condenser tube of a water-cooled heat exchanger of a power plant, in which the seawater containing divalent iron ions is flowing through the condenser tube, including the steps of: removing a phytoplankton in the seawater; electrolyzing the seawater after the removal of the phytoplankton to obtain electrolytically treated seawater; and supplying the electrolytically treated seawater to the condenser tube.

Another aspect of the method according to the present invention is a method of supplying electrolytically treated liquid, including the steps of: measuring a level of chlorophyll in the seawater; removing phytoplankton in the seawater and electrolyzing the seawater after the removal of the phytoplankton when the measured level of the chlorophyll is equal to or higher than a threshold; and electrolyzing the seawater without any additional treatment to obtain electrolytically treated seawater when the level of the chlorophyll measured by a measuring unit is lower than the threshold; and supplying the electrolytically treated seawater to the condenser tube. It is preferable that the threshold is 0.05 µg/L or greater.

### Brief description of the drawings

Fig. 1 shows a transition of the decrease in level of vacuum pressure in a condenser.
Fig. 2 shows a transition of the amount of phytoplankton per 500 L of seawater at a condenser inlet.
Fig. 3 shows a transition of the level of chlorophyll of phytoplankton per 1 L of seawater at a condenser inlet.
Fig. 4 is a schematic view of a device for supplying electrolytically treated liquid according to an embodiment of the present invention.
Fig. 5 shows results of seawater passage test using a simulated piping in an example of the present invention.

### Embodiments of the invention

The objects, features, advantages, and ideas of the present invention are apparent to those skilled in the art from the description of this specification. Those skilled in the art can easily reproduce the present invention from the description herein. The embodiments and specific examples described below represent preferable aspects of the present invention, which are given for the purpose of illustration or explanation. The present invention is not limited thereto. It is obvious to those skilled in the art that various changes and modifications may be made according to the description of the present specification within the spirit and scope of the present invention disclosed herein. == Variation of level of decrease in vacuum in a condenser and amount of phytoplankton ==

In 2011, the level of decrease in vacuum in a condenser of a power plant, the number of phytoplankton individuals per 500 L of seawater at the condenser inlet, the type of phytoplankton in the seawater at the condenser inlet, and the level of chlorophyll per 1 L of seawater at the condenser inlet were examined.

The level of decrease in vacuum in a condenser of a power plant was determined by measuring pressure under the vacuum in the condenser and subtracting the measured pressure from a designed pressure under the vacuum. The designed pressure under the vacuum is determined depending on the temperature of seawater. Accordingly, the temperature of seawater was measured and the designed pressure was calculated based on the measured temperature.

In addition, in order to calculate the number of phytoplankton individuals per 500 L of seawater near the inlet of the condenser, phytoplankton was collected from seawater near the inlet of the condenser by vertical hauling using an NXX13 plankton net (mesh:100 µm, manufactured by RIGO CO., LTD). The number of collected phytoplankton individuals was counted under a microscope and the counted number was converted into the number of phytoplankton individuals per 500 L of seawater.

In order to calculate the level of chlorophyll per 1 L of seawater near the inlet of the condenser, a chlorophyll eluate was obtained from seawater using an acetone extraction method. First, 500 ml of seawater was filtered through a glass filter paper with a pore diameter of 0 . 4 µm, and the filter paper was dried. Then, chlorophyll was eluted from the filter paper using 10 ml of 90% acetone. The absorbance of the chlorophyll eluate thus obtained was measured at 664 nm and 630 nm and the level of chlorophyll per 1 L of seawater was calculated from the measured absorbance using the equation of Jeffrey and Humphrey.

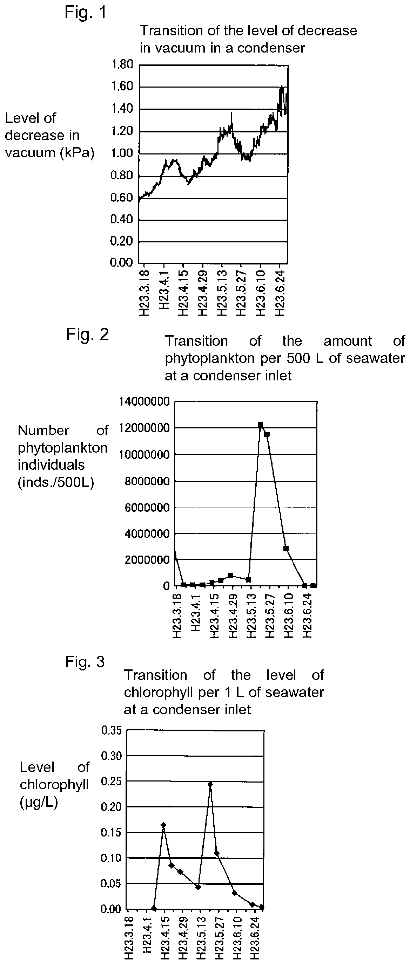

Fig. 1 shows a transition of the level of decrease in vacuum in a condenser. The vertical axis represents the level of decrease in vacuum and the horizontal axis represents the investigation date. The level of vacuum in the condenser was significantly decreased between the early April and the middle of May. In particular, peaks of level of the decrease in vacuum were observed from the beginning of April to the middle of April as well as in the middle of May.

Fig. 2 shows a transition of the amount of phytoplankton per 500 L of seawater at a condenser inlet. The vertical axis represents the number of phytoplankton individuals and the horizontal axis represents the investigation date. An increase in amount of phytoplankton was observed in the middle of May but no change was found in amount of phytoplankton from the beginning to middle of April.

From the beginning to middle of April and the middle of May, *Coscinodiscus wailesii,* a kind of *Chaetoceros,* a kind of *Rhizosoleniaceae, Eucampia zodiacus, Thalassiosira nitzschioides, Odontella sinensis, Stephanopyxispalmeriana,* and *Ditylum brightwelli* were observed. In particular, *Coscinodiscus wailesii,* which has a cylindrical shape containing a lot of chlorophyll, was very abundant on April 13, i.e., 20000 inds./500 L or more.

Fig. 3 shows a transition of the level of chlorophyll per 1 L of seawater at a condenser inlet. The vertical axis represents the level of chlorophyll per 1 L of seawater and the horizontal axis represents the investigation date. The chlorophyll was abundant from the beginning of April to the middle of May. In particular, peaks of the increase in level of chlorophyll were observed from the beginning to middle of April as well as the middle of May. The lowest level of chlorophyll between the beginning of April and the middle of May was 0.05 µg/L.

As can be seen from the above, the period during which the level of vacuum in the condenser is decreased is correlated with the period during which the level of chlorophyll is increased. The decrease in vacuum in the condenser can thus be considered due to the increase in phytoplankton that appears during this season. Since condensers are supplied with electrolyzed seawater, phytoplankton decomposed during the electrolysis is considered to be responsible for the decrease in vacuum in the condensers. Accordingly, the decrease in vacuum in condensers can be prevented by removing phytoplankton from the seawater supplied to electrolysis devices.

### == Device for supplying electrolytically treated liquid ==

A device for controlling supply of chlorine according to the present invention is described below.

### (Embodiment 1)

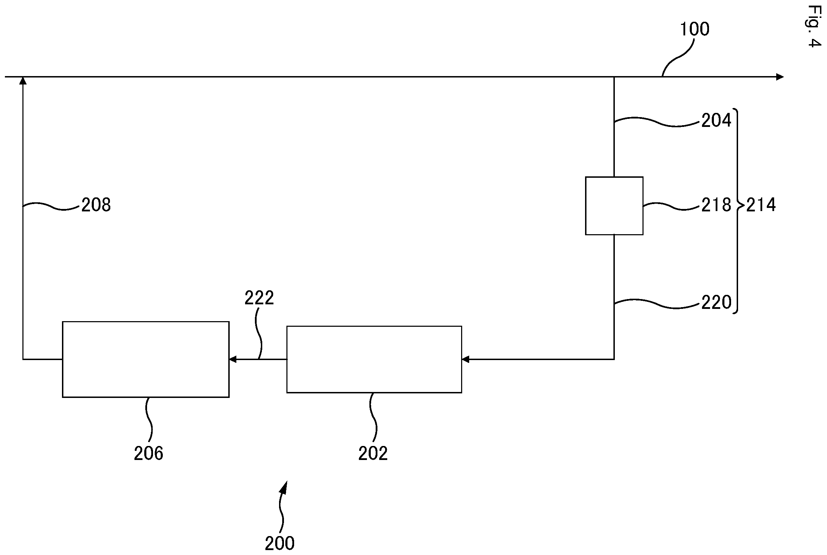

Fig. 4 schematically shows an embodiment of a device for supplying electrolytically treated liquid according to the present invention.

A device for supplying electrolytically treated liquid 200 supplies electrolytically treated seawater to a seawater supply pipe 100 connected to condenser tubes of a cooler of a power plant through which seawater containing divalent iron ions flow. The device for supplying electrolytically treated liquid 200 has a seawater electrolyzer unit 202 for electrolyzing seawater, a seawater supply passage 214 for supplying seawater from the pipe 100 to the seawater electrolyzer unit 202, and an electrolytically treated liquid supply passage 208 for supplying electrolytically treated seawater obtained in the seawater electrolyzer unit 202 to the seawater supply pipe 100.

The seawater supply passage 214 has a seawater-intake passage 204, a phytoplankton-removal unit 218, and a phytoplankton-removal flow passage 220. The seawater-intake passage 204 is connected to the seawater-supply pipe 100 and the phytoplankton-removal unit 218 and supplies the seawater in the seawater supply pipe 100 to the phytoplankton-removal unit 218. The phytoplankton-removal flow passage 220 is connected to the phytoplankton-removal unit 218 and the seawater electrolyzer unit 202 and carry the seawater from which phytoplankton has been removed by the phytoplankton-removal unit 218 to the seawater electrolyzer unit 202.

The seawater electrolyzer unit 202 can be, for example, an electrolytic tank in which seawater is electrolyzed to produce hypochlorous acid. In this embodiment, the seawater electrolyzer unit 202 is connected to an electrolytically treated liquid receiver 206 through an electrolytically treated liquid transfer pipe 222. A liquid containing hypochlorous acid produced by the seawater electrolyzer unit 202 is temporarily stored in the electrolytically treated liquid receiver 206 via the electrolytically treated liquid transfer pipe 222. The electrolytically treated liquid receiver 206 is connected to the seawater supply pipe 100 through the electrolytically treated liquid supply passage 208. The liquid containing hypochlorous acid in the electrolytically treated liquid receiver 206 is supplied to the seawater in the seawater supply pipe 100 through the electrolytically treated liquid supply passage 208.

The phytoplankton-removal unit 218 may not be limited as long as it can reduce the amount of phytoplankton in the seawater flowing from the seawater supply pipe 100 into the seawater intake passage 204. For example, a filter device by which phytoplankton can be filtered out or a water tank in which phytoplankton can be precipitated out can be used. When a filter device is used, the pore diameter of a filter membrane used for the filter device is preferably 200 µm or smaller, more preferably 150 µm or smaller, and most preferably 100 µm or smaller.

The phytoplankton to be removed is not specifically limited. Examples include *Coscinodiscus, Ditylum, Thalassionema, Odontella, Eucampia, Stephanopyxis, Rhizosolenia, Asterionellopsis,* and *Chaetoceros.*

The material used for the power plant condenser tubes is not specifically limited, but aluminum brass is preferable.

The seawater flowing through the seawater supply pipe 100 may contain divalent iron ions by adding a compound capable of generating divalent iron ions at a position upstream of the pipe. The compound capable of generating divalent iron ions is, for example, preferably ferrous sulfate but is not specifically limited. The method and frequency of addition are not specifically limited but it is preferable that the compound is continuously added. The concentration of the divalent iron ions in the seawater after the addition of the compound is not specifically limited but preferably 0.05 ppm or higher, more preferably 0.1 ppm or higher, yet more preferably 0.3 ppm or higher, still more preferably 1.0 ppm or higher but preferably 10 ppm or lower, more preferably 3.0 ppm or lower, and yet more preferably 1.0 ppm or lower.

A characteristic configuration of the present invention is to supply an electrolytically treated liquid obtained by electrolyzing seawater after the removal of the phytoplankton to the seawater flowing through the power plant condenser tubes, which results in the reduction in the amount of organic substances such as chlorophyll released along with the electrolytically treated liquid into the seawater supply pipe 100 of a power plant. Accordingly, it is possible to prevent decrease in level of vacuum of the condenser tubes of a power plant.

### (Embodiment 2)

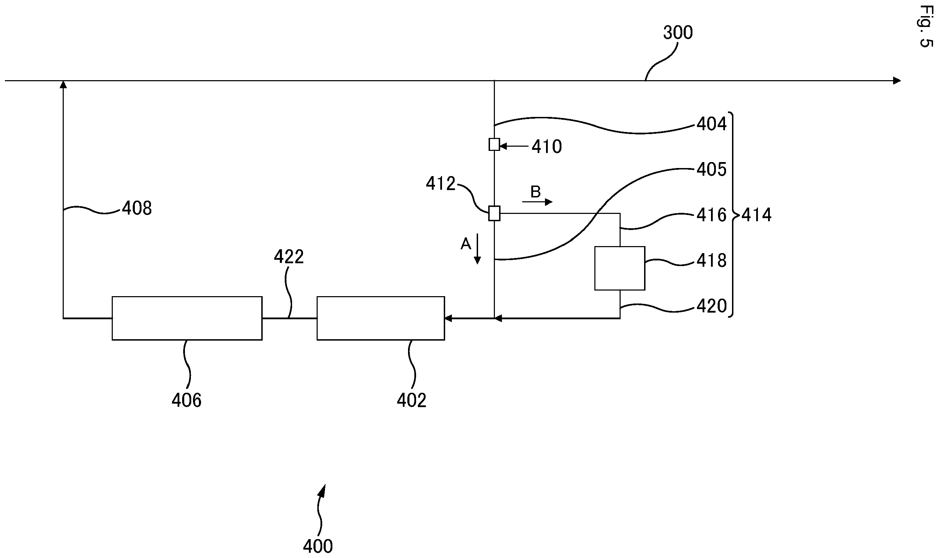

Fig. 5 schematically shows another embodiment of a device for supplying electrolytically treated liquid according to the present invention. As shown in the figure, the device for supplying electrolytically treated liquid according to this embodiment has, in addition to the components shown in Embodiment 1, a measuring unit 410 for measuring the level of chlorophyll in seawater which is disposed upstream of a phytoplankton-removal unit 418 in a seawater supply passage 414, and a communication passage 405 which has a junction at a position downstream of the measuring unit 410 of the seawater supply passage 414 and upstream of the phytoplankton-removal unit 418 and communicate with a seawater electrolyzer unit 402 without passing through the phytoplankton removal-unit.

The measuring unit 410 detects the level of chlorophyll of phytoplankton in the seawater passing through the measuring unit 410. It is only required for the measuring unit 410 to have a device capable of detecting the level of chlorophyll. An example of such a device is a chlorophyll fluorescence meter (e.g., the one manufactured by Turner Designs, Inc., Kasahara Chemical Instruments Corp., or JFE Advantech Co., Ltd.). It should be noted that chlorophyll in many kinds of phytoplankton can be detected from outside of the phytoplankton using, for example, a chlorophyll fluorescence meter and therefore the level of chlorophyll of phytoplankton in seawater can be detected without breaking the phytoplankton.

A flow switch valve 412 is provided at the junction of the communication passage 405 in the seawater supply passage 414. By operating the flow switch valve 412, it is possible to direct the seawater which has flown into the device for supplying electrolytically treated liquid 200 either to a route A (depicted by an arrow A in Fig. 5), which delivers the seawater into the seawater electrolyzer unit 402 without passing through the phytoplankton-removal unit 418 or a route B (depicted by an arrow B in Fig. 5), which delivers the seawater into the seawater electrolyzer unit 402 via the phytoplankton-removal unit 418. In the route A, the junction is communicated with the flow inlet of the seawater electrolyzer unit. In the route B, the junction is communicated with one end of an intake passage 416; the other end of the intake passage 416 is communicated with a flow inlet of the phytoplankton-removal unit 418; a flow outlet of the phytoplankton-removal unit 418 is communicated with one end of a phytoplankton-removal flow passage 420; and the other end of the phytoplankton-removal flow passage 420 is communicated with a flow inlet of the seawater electrolyzer unit 402. When the route B is closed and the route A is opened at the junction, the seawater directed into the device for supplying electrolytically treated liquid 400 flows into the seawater electrolyzer unit 402 without passing through the phytoplankton-removal unit 418. When the route A is closed and the route B is opened at the junction, the seawater directed into the device for supplying electrolytically treated liquid 400 flows into the seawater electrolyzer unit 402 via the phytoplankton-removal unit 418.

In this embodiment, a control unit (not shown in the figure) for controlling the flow switch valve may be provided so that the seawater is directed to the route B when the level of the chlorophyll measured by the measuring unit 410 is equal to or higher than a threshold and to the route A when the level of the chlorophyll measured by the measuring unit 410 is lower than the threshold. The threshold is preferably 0.05 µg/L or greater, more preferably 0.10 µg/L or greater, and most preferably 0.15 µg/L or greater. The present invention is not limited to embodiments having the flow switch valve 412 and a control unit for controlling the flow switch valve 412 and the route A and B can be switched manually.

As described above, in this embodiment, it is possible to select the route where the seawater flows between the route directed to the seawater electrolyzer unit without passing through the phytoplankton-removal unit and the route along which the seawater is not flown into the seawater electrolyzer unit without passing through the phytoplankton-removal unit, depending on the level of chlorophyll of the phytoplankton in the seawater flowing through the seawater intake passage. Accordingly, the device for supplying electrolytically treated liquid can be used without directing the seawater into the phytoplankton-removal unit when it is not necessary to remove phytoplankton. Since the phytoplankton-removal unit is consumed when the seawater is flown into it even if the seawater does not contain phytoplankton, it is required to undergo maintenance operation. For example, when a filter device is used as the phytoplankton-removal unit, the filter membrane in the filter device will be clogged with materials contained in seawater when seawater that has no requirement for removal of phytoplankton is flown into the filter device. This produces the need for maintenance of the filter device. In this embodiment, the seawater is not flown into the phytoplankton-removal unit when it is not necessary to remove phytoplankton; thus burden associated with maintenance of the phytoplankton-removal unit is reduced.

### == Method of supplying electrolytically treated liquid ==

Next, a method of supplying electrolytically treated liquid according to the present invention is described in detail, by which the electrolytically treated seawater is supplied to condenser tubes through which seawater containing divalent iron ions is flowing.

### (Embodiment 1)

First, referring to Fig. 4, an embodiment using the device for supplying electrolytically treated liquid 200 is described in detail.

In this embodiment, first, phytoplankton in the seawater flown from the seawater supply pipe 100 through the seawater intake passage 204 is removed by the phytoplankton-removal unit 218. Next, the seawater after the removal of the phytoplankton is supplied to the seawater electrolyzer unit 202 and generates electrolytically treated seawater. Subsequently, the electrolytically treated seawater obtained in the seawater electrolyzer unit 202 is stored in the electrolytically treated liquid receiver 206 through the electrolytically treated liquid transfer pipe 222. Then, it is supplied from the electrolytically treated liquid receiver 206 to the seawater supply pipe 100 through the electrolytically treated liquid supply passage 208.

As described above, the method of supplying electrolytically treated liquid according to the present invention by which the electrolytically treated seawater is supplied to condenser tubes through which seawater containing divalent iron ions is flowing includes the steps of, in the order described below: removing phytoplankton in seawater; supplying the seawater after the removal of the phytoplankton to the seawater electrolyzer unit; supplying the electrolytically treated seawater obtained by the seawater electrolyzer unit to the condenser tubes through which the seawater containing the divalent iron ions is flowing; thereby the amount of organic substances such as chlorophyll released along with the electrolytically treated liquid into the seawater supply pipe 100 can be decreased. As a result, it is possible to reduce the formation of films on the condenser tubes.

### (Embodiment 2)

Next, referring to Fig. 5, another embodiment using the device for supplying electrolytically treated liquid 400 is described in detail.

In this embodiment, first, the level of chlorophyll in the seawater flown from a seawater supply pipe 300 through a seawater intake passage 404 is measured by the measuring unit 410. When the measured level of the chlorophyll is equal to or higher than a threshold, the seawater is directed to the flow path B and phytoplankton in the seawater is removed by the phytoplankton-removal unit 418. Then, the seawater after the removal of the phytoplankton is supplied to the seawater electrolyzer unit 402. On the other hand, when the level of chlorophyll measured by the measuring unit 410 is lower than the threshold, the seawater is directed to the flow path A and it is directly supplied to the seawater electrolyzer unit 402. In this specification, the term "electrolyze without any additional treatment" means that the seawater is supplied directly to the seawater electrolyzer unit 402 rather than the phytoplankton-removal unit 418. Next, the electrolytically treated seawater thus obtained is supplied to the seawater supply pipe 300.

According to this embodiment, the device for supplying electrolytically treated liquid can be used without directing the seawater into the phytoplankton-removal unit when it is not necessary to remove phytoplankton. As a result, in this embodiment, burden associated with maintenance of the phytoplankton-removal unit can be reduced.

### Industrial applicability

The present invention can provide devices for supplying electrolytically treated liquid and methods of supplying electrolytically treated liquid.
- 100: a seawater supply pipe
- 200: a device for supplying electrolytically treated liquid
- 202: a seawater electrolyzer unit
- 204: a seawater intake passage
- 206: an electrolytically treated liquid receiver
- 208: an electrolytically treated liquid supply passage
- 210: a measuring unit
- 212: a flow switch valve
- 214: a seawater supply passage
- 218: a phytoplankton-removal unit
- 220: a phytoplankton-removal flow passage
- 222: an electrolytically treated liquid transfer pipe
- 300: a seawater supply pipe
- 400: a device for supplying electrolytically treated liquid
- 402: a seawater electrolyzer unit
- 404: a seawater intake passage
- 405: a communication passage
- 406: an electrolytically treated liquid receiver
- 408: an electrolytically treated liquid supply passage
- 410: a measuring unit
- 412: a flow switch valve
- 414: a seawater supply passage
- 416: an intake passage
- 418: a phytoplankton-removal unit
- 420: a phytoplankton-removal flow passage
- 422: an electrolytically treated liquid transfer pipe

## Claims

1. A device for supplying electrolytically treated seawater to a condenser tube of a water-cooled heat exchanger of a power plant, wherein seawater containing divalent iron ions is flowing through the condenser tube, the device comprising:
a seawater electrolyzer unit for electrolyzing seawater;
a seawater supply passage for supplying the seawater to the seawater electrolyzer unit;
an electrolytically treated liquid supply passage for supplying the electrolytically treated seawater obtained by electrolysis in the seawater electrolyzer unit to the condenser tube; and
a phytoplankton-removal unit for removing a phytoplankton, being provided in the seawater supply passage.

2. The device according to Claim 1, further comprising a measuring unit provided in the seawater supply passage, wherein a level of chlorophyll is measured in the seawater at a position upstream of the phytoplankton-removal unit with the measuring unit.

3. The device according to Claim 2, further comprising:
a communication passage provided in the seawater supply passage, the communication passage being divided at a junction located downstream of the measuring unit of the seawater supply passage and upstream of the phytoplankton-removal unit, the communication passage being communicated with the seawater electrolyzer unit without passing through the phytoplankton removal-unit;
a flow switch valve disposed at the junction; and
a control unit for controlling the flow switch valve in such a manner that, when the level of the chlorophyll measured by the measuring unit is equal to or higher than a threshold, the seawater is supplied from the seawater supply passage to the seawater electrolyzer unit through the phytoplankton-removal unit, and when the level of the chlorophyll measured by the measuring unit is lower than the threshold, the seawater is supplied from the seawater supply passage to the seawater electrolyzer unit through the communication passage.

4. The device according to Claim 3, wherein the threshold is 0.05 µg/L or greater.

5. The device according to any one of Claims 1 to 4, wherein the tube is made of aluminum brass.

6. The device according to any one of Claims 1 to 5, wherein the phytoplankton-removal unit is a filter device capable of removing the phytoplankton via filtration.

7. A method of supplying electrolytically treated seawater to a condenser tube of a water-cooled heat exchanger of a power plant, wherein seawater containing divalent iron ions is flowing through the condenser tube, the method comprising the steps of:
removing a phytoplankton in the seawater;
electrolyzing the phytoplankton-removed seawater to obtain electrolytically treated seawater; and
supplying the electrolytically treated seawater to the condenser tube.

8. A method of supplying electrolytically treated seawater to a condenser tube of a water-cooled heat exchanger of a power plant, wherein seawater containing divalent iron ions is flowing through the condenser tube, the method comprising the steps of:
measuring a level of chlorophyll in the seawater;
removing phytoplankton in the seawater and electrolyzing the seawater after the removal of the phytoplankton when the measured level of the chlorophyll is equal to or higher than a threshold; and electrolyzing the seawater without any additional treatment to obtain electrolytically treated seawater when the level of the chlorophyll measured by a measuring unit is lower than the threshold; and
supplying the electrolytically treated seawater to the condenser tube.

9. The method according to Claim 8, wherein the threshold is 0.05 µg/L or greater.
